# EUROPEAN PATENT APPLICATION

(11) **EP 1 739 519 A1**
(43) Date of publication of application: **03.01.2007**
(21) Application number: 05291422.3
(22) Date of filing: 30.06.2005
(51) Int. Cl.: G06F 1/00

(54) **Method to secure the execution of a program against attacks by radiation or other**

(71) Applicant: Axalto SA, 92120 Montrouge (FR)
(72) Inventor: Gombocz, Pascal c/o Axalto SA, IP Dpt, 78431 Louveciennes Cedex (FR); Poncelet, Olivier c/o Axalto SA, IP Dpt, 78431 Louveciennes Cedex (FR); Ortega, Frédéric c/o Axalto SA, IP Dpt, 78431 Louveciennes Cedex (FR); Pepin, Cyrille c/o Axalto SA, IP Dpt, 78431 Louveciennes Cedex (FR); Giraud, Nicolas c/o Axalto SA, IP Dpt, 78431 Louveciennes Cedex (FR)
(74) Representative: Renault, Patricia Marie Jacqueline

(57) **Abstract**

The method according to this invention concerns a method to secure the execution of a program in an electronic assembly including data processing means and data storage means. The method consists in producing a supplementary result depending on at least one of the input parameter(s) of a called function in said program in order to check the integrity of said parameter(s) when used by said function.

This invention also concerns the electronic module in which said method is implemented and the card comprising said module.

## Description

This invention concerns a method and a device to secure an electronic assembly implementing a program to be protected. More precisely, the purpose of the method is to propose a defence against attacks by radiation, flash, light, laser, glitch or other and more generally against any attack disturbing the execution of the program instructions. These attacks modify the instructions to be executed, resulting in non-execution or incorrect execution of certain parts of the program.

### TECHNICAL FIELD

When executing a program, attacks for example by laser, glitch or electromagnetic radiation modify the instruction codes executed by the processor or the addresses of the data to handle. The program instructions may be replaced by inoperative instructions. Consequently, certain sections of the code fail to execute or execute irregularly, for example the execution of inoperative instructions instead of a security processing sequence, for example in an operating system for smart card. The attacks may disturb the processor operation and cause untimely jumps in the program memory.

These types of attack also allow remove intermediary treatments on data used in the program or modify pointers on data to handle. In both cases, the resulting effect is that the sensitive operations are executed with data different from those provided by the programmer. More particularly, the parameters of a called function in a program contain sensitive information. If the parameters are not correctly initialized when calling said function, the function will be executed correctly but the awaited result will not be the right one. The execution of a routine with parameters different from the waited ones may have serious consequences in term of security.

In addition, these types of attack on read operation in memory have an impact on the read addresses and the number of read bytes. The modification by a radiation attack of the pointers on the data to handle or the number of bytes to handle, which are parameters passed in as argument between the different layers of the program may be used to change the read addresses in the memory. With such type of attack, a hacker can have access to zones of sensitive data and particularly to zones which can not be reached in a normal processing, and can have an impact on cryptographic operations and for example the loading of keys.

The present applicant filed a French patent application No. 03293036 on 4 December 2003 concerning a method to secure the execution of a program against attacks by radiation or other which consists in checking the execution of each instruction of at least one portion of said program by performing during the execution of said portion a calculation using predetermined values, depending on or associated with each of said instructions and by comparing the result obtained with a precalculated value. However, the values of the parameters of a called function do not correspond to the parameters of an instruction. The parameters of an instruction are known in advance which is not the case of the parameters used to call a function: these parameters cannot be precalculated. For example, they can come from the user and correspond to external input(s) in the system. So the method according to said patent application does not protect the initialization of parameters of a called function.

One purpose of this invention is to propose efficient protection to make secure the initialization of parameters and to avoid the execution of a program with parameters different from the provided ones.

Another purpose of this invention is to make secure the read operation, and any other operation requiring input parameter(s) as cryptographic operation (for which the input parameters are the key and the message).

Another purpose of this invention is to propose a solution, which could be implemented in the current components without adaptation, which consumes few resources and which does not reduce the performance of the assembly in which it is implemented.

### SUMMARY OF THE INVENTION

This invention concerns a method to secure the execution of a program in an electronic assembly including data processing means and data storage means, characterised in that it consists in producing a supplementary result depending on at least one of the input parameter(s) of a called function in said program in order to check the integrity of said parameter(s) when used by said function.

This invention also concerns an electronic module in which said method is implemented, a card comprising said module and a program to implement said method.

### BRIEF DESCRIPTION OF THE DRAWINGS

Other purposes, features and advantages of the invention will appear on reading the description which follows of the implementation of the method according to the invention and of a mode of realisation of an electronic system designed for this implementation, given as a non-limiting example, and referring to the attached drawings in which:
- figure 1 is a diagrammatic representation of an example of a device in which the method according to this invention is implemented;
- figure 2 is a diagrammatic representation of the execution of a program, in which the steps of the security method according to one form of realisation of this invention have been demonstrated;
- figure 3 is an extract of an example of a program implementing the security method according to the form of realisation represented on figure 2;
- figure 4 is a diagrammatic representation of the execution of the program represented on figure 3 ;
- figure 5 is a diagrammatic representation of the execution of a program, in which the steps of the security method according to another form of realisation of this invention have been demonstrated;
- figures 6 and 7 are extracts of two examples of programs implementing the security method according to the form of realisation represented on figure 5.

### WAY OF REALISING THE INVENTION

The purpose of the method according to the invention is to secure an electronic assembly and for example a portable object such as a smart card implementing a program. The electronic assembly comprises at least processing means such as a processor and storage means such as a memory. The program to be secured is installed in the memory, for example ROM (Read Only Memory) type, of said assembly.

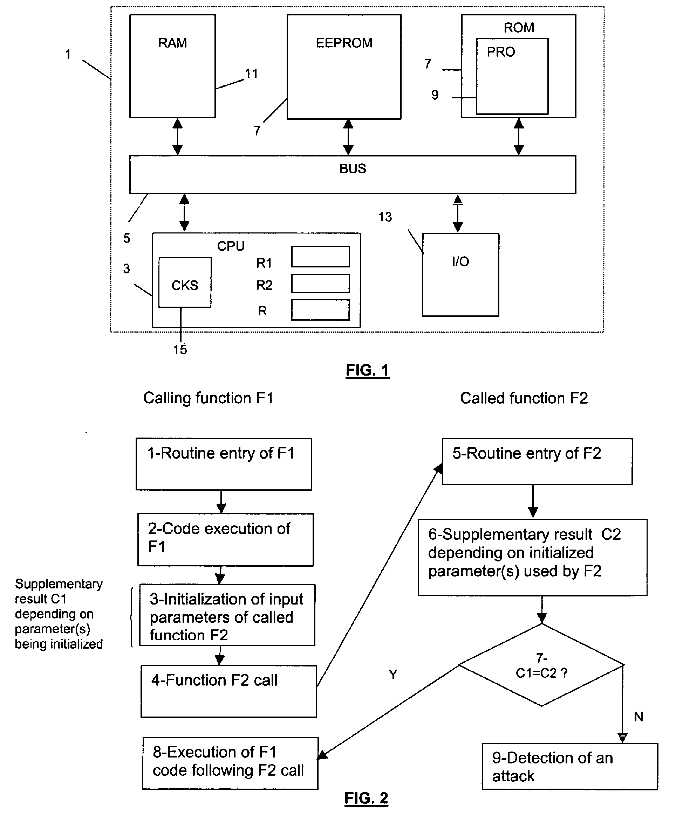

As a non-limiting example, the electronic assembly described below corresponds to an onboard system comprising an electronic module 1 illustrated on figure 1. This type of module is generally realised as a monolithic integrated electronic microcircuit, or chip, which once physically protected by any known means can be assembled on a portable object such as for example a smart card, microcircuit or integrated circuit card (microprocessor card, etc.) or other card which can be used in various fields.

The electronic module 1 comprises a microprocessor CPU 3 with a two-way connection via an internal bus 5 to a non volatile memory 7 of type ROM, EEPROM, Flash, FeRam or other containing the program PRO 9 to be executed, a volatile memory 11 of type RAM, input/output means I/O 13 to communicate with the exterior. The microprocessor 3 uses at least one, in the example hereafter described three registers R1, R2, R where it stores temporarily result of its calculation (as R) or where data are loaded to be used by the microprocessor (as R1 and R2).

The method according to the invention consists in checking that called functions of a program 9 in the different layers of the software contained in the assembly 1 are correctly executed by the microprocessor 3 with the right parameters. In order to do so, the present method consists in checking:
- the correct initialization of said parameter(s) before the execution of said function and/or
- the execution of said function with the right initialized parameter(s).

A program comprises numerous conditional tests and routine calls translated into machine code using branch, jump, routine call instructions or equivalent, i.e. instructions creating branches in the execution flow. In this invention, each entry point, jump instruction or equivalent in the program code, needing input parameter(s), forms hereafter the so-called "called function". The parameter designates the data transmitted as argument of a called function, which is not known before the execution of the program.

The present method consists in producing a supplementary result depending on the input parameter(s) of a called function in a program and in checking with said result the integrity of said parameter(s). In the embodiments described hereafter, either the supplementary result is calculated by the called function and checking is performed by the calling function or the supplementary result is calculated by the calling function and checking is performed by the called function. This allows controlling the integrity of the data when passing as argument from one function to another and/or the integrity of the used parameter(s) for the execution of the called function.

According to one embodiment of the present invention illustrated on figure 2, the method consists in checking the correct initialization of said input parameter(s) before the execution of the called function. The method consists in producing a result depending on the input parameter(s) when calling a function and for example in calculating a checksum with said input parameter(s) (see step 3 "supplementary calculation C1" on figure 2). A checksum is a "sum" of a set of data items, i.e. a value calculated which depends on the content of said data, used for verification and integrity purposes. The checksum may also be performed on other supplementary information as for example the address of the called function F2: it allows checking additionally the application is located correctly with the right parameters. These supplementary information may be used to check the correct execution of the program.

Some components allow with hardware means 15 calculating in real time a checksum on assembler instructions of data loading in registers; the result of the calculation is located in an internal register R of said component. The present method may use such type of components to calculate a first checksum C1 on the input parameters of function F2 and on the address of said function F2, which are located in registers R1 and R2 of the microprocessor 3 when initialized (function F2 call). The result of said checksum is placed in the register R of the module 1. In this embodiment, the supplementary calculation may be performed during the microprocessor operation, in parallel (step 3 in figure 2). Then the function F2 is executed (step 4 in figure 2) and in a step 6, at the beginning (first instruction of the function F2), during the execution of F2 or just before returning (last instruction of the function F2) to the calling function, a software mechanism checks the integrity of the parameter(s) loaded and used in the called function in comparison with the stored result in register R (steps 6 and 7 of figure 2): to do so, at the beginning of the called function F2, a second checksum C2 is calculated by said function (software checksum ― step 6 of figure 2) on the loaded parameters and used by the called function F2. Then, a comparison between the first and the second checksum is made (step 7 in figure 2). If they correspond, the execution continues. If not, an attack is detected.

If an attack takes place during the call on the function F2, the called function is not executed with the planned parameters and the supplementary result (C2) with the wrong parameters is different from the expected supplementary result C1; the attack is therefore detected ("Detection of an attack" on the figure 2) and a specific action may be performed by the program or the processor. If the check does not detect an anomaly, the program continues.

Checking the supplementary result can be carried out by software by reading the value in the register R and by comparing it with the calculated value in the called function. This check could also be carried out by the hardware by supplying the second calculated value C2 to the processor. This value C2 can be supplied as parameter of a modified call return instruction or of an instruction especially added to the processor instruction set. This remark may be applied to the different following specified embodiments.

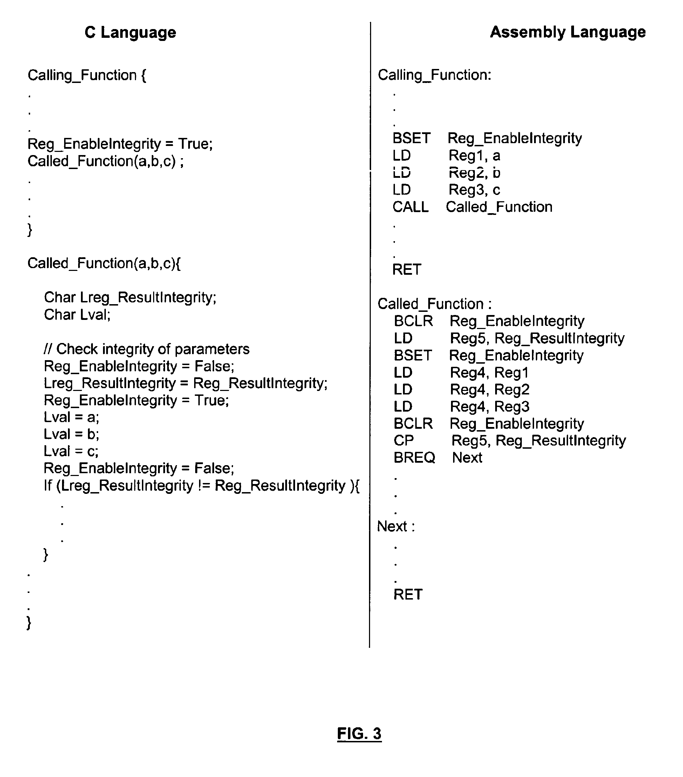

An example of a program implementing the embodiment illustrated on figure 2 is shown on figure 3. The register Reg_Resultatlntegrity contains the result of the calculation of the parameters integrity. The register Reg_Enablelntegrity contains the result True/false, which corresponds to the activation/desactivation of the hardware calculation: when the data contained in said register takes the value True, the data in the register Reg_Resultatlntegrity takes the value zero.

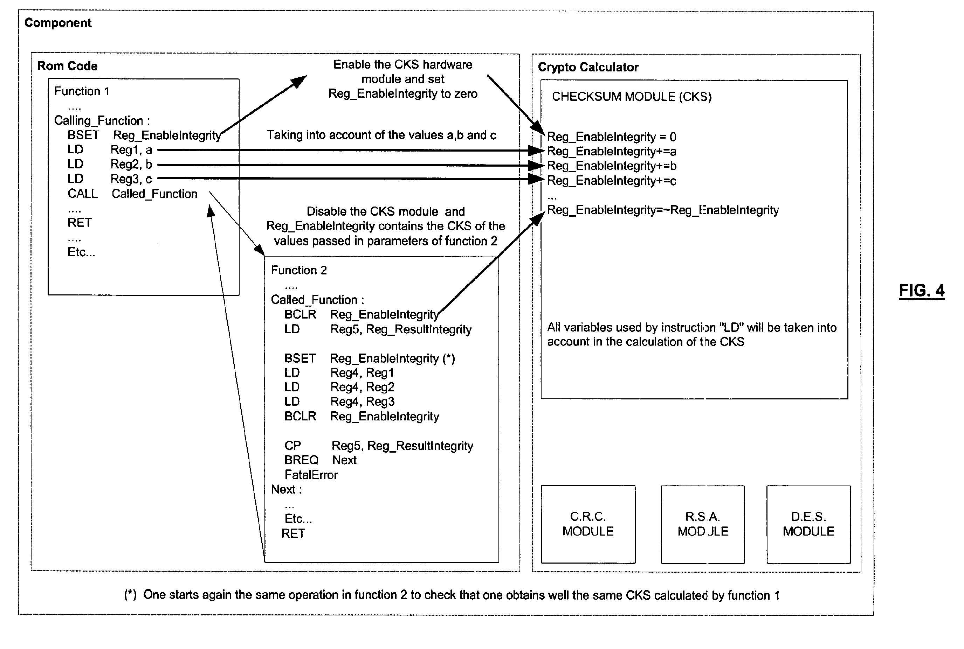

As represented on figure 4, the example of program written on figure 3 works as follows :

Firstly, the hardware module 15 is activated and a hardware checksum is calculated on the content of the different registers Reg1, Reg2, Reg3. The supplementary result is loaded in the register Reg_Enablelntegrity. Then the function 2 is called ("CALL Called_function2"). The register Reg_Enablelntegrity contains the supplementary result, i.e. the checksum of the values sent as parameters to the function 2. Then in the function 2, a checksum on the initialized parameters is calculated and loaded in the register "Reg_Resultatlntegrity". A comparison is made between the calculated checksums ("CP ...").

According to another embodiment of the present invention illustrated on figure 4, the method consists in checking the execution of a called function in a program with the right initialized parameter(s). The method consists in producing in the called function F2 a supplementary result C1 depending on the input parameter(s) and in returning said result C1 to the calling function F1 in order to check the integrity of said parameter(s).

If an attack takes place during the call or the execution of the called function F2, the called function is not executed with the planned and initialized parameters and the supplementary result C1 is different from the expected value C2 (corresponding to the loaded parameters); the attack is therefore detected ("Detection of an attack" on the figure 4) and a specific action may be performed by the program or the processor. If the check does not detect an anomaly, the program continues.

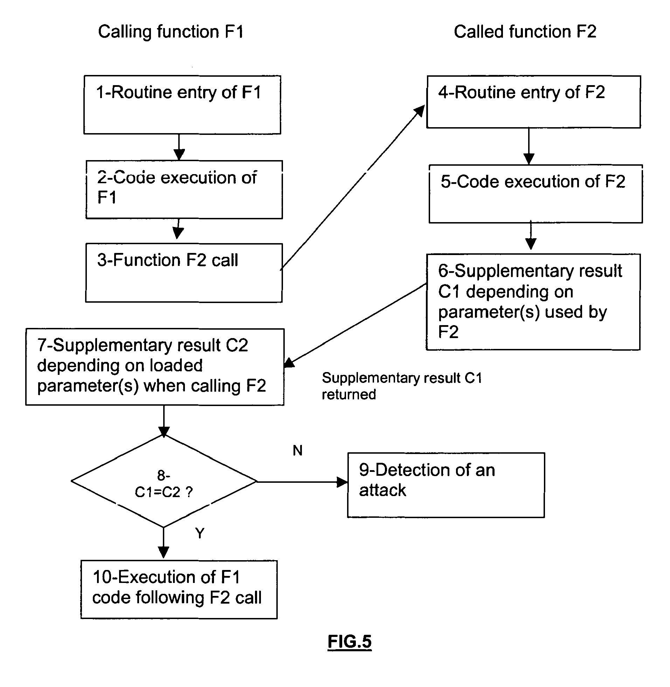

A first example of supplementary result in said second embodiment illustrated on figure 5 is the address of the last location of the read data in memory when the called function corresponds to the read operation. The read function typically takes as argument the address of the first location (byte) of the data to read and the number of areas (bytes) to read. Read is executed till the address of the last location (byte) of data to read is reached. This address C1 provided as result of the called function is compared by the calling program with the waited value C2 calculated in function of the parameters provided as input of the function.

### A difference between the two values launches a secure process.

The cryptographic algorithms may be the targets of attacks by fault injection aiming at modifying the handled data. A disturbance on the operations of key loading or on the pointer of the key of a cryptographic calculation function can make it possible to carry out calculation with a false key corresponding to a key used in preceding treatments or to data present in another storage area of work memory. By this means, the attacker can cancel cryptographic operations or obtain a cryptogram with a selected key or all at least known.

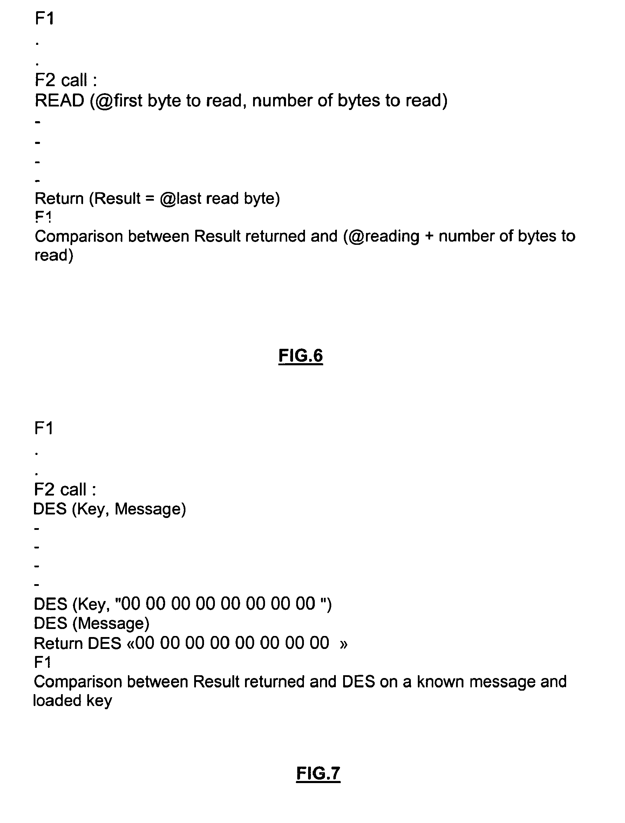

The invention can apply to the protection of cryptographic algorithms by providing as shown by figure 6 in return of the cryptographic calculation function, the result of the encryption of a known message with the secret key provided in argument. The cryptographic calculation function DES typically takes in entry a secret key and a message to be encrypted or decrypted.

The secret key is loaded in the hardware module "hardware DES" of the component to carry out calculation. The application of the invention consists in that this function carries out (before or after the encryption/decryption calculation of the message) a "reference" encryption calculation of a predetermined message (for example "00 00 00 00 00 00 00 00"). This "reference" calculation is provided as result of the function and allows the calling program to check that the validity of the loaded key by comparing the result of the "reference" calculation with the awaited result.

The awaited result (DES encryption of the message "00 00 00 00 00 00 00 00" commonly called KCV or Key Check Value) can be precalculated and stored in nonvolatile memory in the phase of personalization or not.

The installation of this mechanism requires the addition of the code of production of the "reference" result provided by the protected function and the addition of the code for checking the result.

## Claims

1. Method to secure the execution of a program in an electronic assembly including data processing means and data storage means, **characterised in that** it consists in producing a supplementary result depending on at least one of the input parameter(s) of a called function in said program in order to check the integrity of said parameter(s) when used by said function.

2. Method according to claim 1, **characterised in that** it consists in checking in addition to the input parameter(s) other information relative to the correct execution of the program.

3. Method according to one of claims 1 or 2, **characterised in that** it consists in checking the correct initialization of the input parameter(s) when calling said function.

4. Method according to one of claims 1 to 3, **characterised in that** it consists in performing a checksum on the input parameter(s) when calling said function and in checking the value of said checksum with the one calculated with the parameter used when executing said called function.

5. Method according to one of claims 1 to 4, **characterised in that** it consists in checking the execution of the called function with the right initialized parameter(s).

6. Method according to one of claims 1 to 5, **characterised in that** it consists in checking the execution of a read function by producing as supplementary result at least one read location.

7. Method according to one of claims 1 to 6, **characterised in that** it consists in checking the execution of a cryptographic function by producing as supplementary result the result of said cryptographic function applied on a known message with the key given as input parameter.

8. Electronic module including data processing means and data storage means containing a program to be executed, **characterised in that** the processing means include means to produce a supplementary result depending on at least one of the input parameter(s) of a called function in said program in order to check the integrity of said parameter(s) when used by said function.

9. Module according to claim 8, **characterised in that** said means comprise a processor which has special instructions or modified instructions of known type to take into account the supplementary result and make the comparison.

10. Module according to claim 8, **characterised in that** the calculation performed is made available to a software module performing the comparison.

11. Card **characterised in that** it comprises the electronic module according to one of claims 8 to 10.

12. Computer program comprising program code instructions to execute the steps of the method according to one of claims 1 to 7 when said program is run in an electronic assembly.
